# EUROPÄISCHE PATENTSCHRIFT

(11) **EP 0 536 571 B1**
(45) Veröffentlichungstag und Bekanntmachung des Hinweises auf die Patenterteilung: **16.08.1995**
(21) Anmeldenummer: 92115879.6
(22) Anmeldetag: 17.09.1992
(51) Int. Cl.: B65G 1/14, B65G 1/02

(54) **Stapelsäule zum Lagern von Lagergütern**
Piling column for stacked material
Colonne d'empilage pour marchandises stockées

(30) Priorität: 09.10.1991 DE 4133464
(43) Veröffentlichungstag der Anmeldung: 14.04.1993
(73) Patentinhaber: Croon & Lucke Maschinenfabrik GmbH, D-88512 Mengen (DE)
(72) Erfinder: Schöller, Heinz, D-78239 Rielasingen-Worblingen (DE)
(74) Vertreter: Weiss, Peter, Dr. rer.nat.

(56) Entgegenhaltungen:
- DE-A- 3 811 310
- DE-B- 1 041 869

## Beschreibung

Die Erfindung betrifft eine Stapelsäule zum Lagern von Lagergütern übereinander in gegenseitigen Abständen auf zweiarmigen Klinkenhebeln, welche an etwa horizontal zwischen zwei Wandstreifen angeordneten Drehachsen drehbar gelagert sind und einerseits einen Tragarm zum Halten des Lagergutes und andererseits einen Steuerarm aufweisen.

Derartige Stapelsäulen dienen insbesondere zur Aufnahme von flächigen Ladegütern, wie sie beispielweise bei der Herstellung von Automobilteilen anfallen. Es gibt aber noch eine Vielzahl anderer Anwendungsbereiche, die von der vorliegenden Erfindung umfaßt sein sollen.

In der DE-A-38 11 310 ist eine derartige Stapelsäule beschrieben, welche das Stapeln von Lagergütern annähernd gleicher Form und Größe in gegenseitigen Abständen übereinander betrifft. Hierzu sind an der Säule zweiarmige Klinkenhebel übereinander an horizontale Drehachsen drehbar gelagerte, die jeweils einen, ein Lagergut aufnehmenden Tragarm sowie einen Steuerarm aufweisen. Sie sind aus einer Ruhestellung über eine Bereitschaftsstellung in eine Arbeitsstellung und wieder zurück schwenkbar. Beim Auflegen eines Lagergutes gelangt ein in Bereitsschaftsstellung befindlicher Klinkenhebel in seine Arbeitsstellung und gleichzeitig ein darüber angeordneter Klinkenhebel durch den Steuerarm des in Arbeitsstellung gelangenden Klinkenhebels aus seiner Ruhestellung in seine Bereitsschaftsstellung. Ferner werden dabei die sich in Arbeitsstellung befindlichen Klinkenhebel gegeneinander in dieser Stellung verriegelt. Diese Klinkenhebel sind abwechselnd seitlich versetzt zueinander und aneinander vorbeigleitend angeordnet.

Diese Stapelsäule hat sich hervorragend für die Aufnahme von flächigem Ladegut bewährt. Allerdings bieten sich Schwierigkeiten insbesondere bei einem Ladegut, welches hohe Ausformungen besitzt, so daß ein darüber angeordnetes Ladegut nur im Abstand zu dieser hohen Ausformung angeordnet werden kann. Beispielsweise kann dies für einen Kofferraumdeckel gelten, der zwar einerseits flach und eben ausläuft, andererseits aber mit einer Schürze nach unten gezogen ist. Diese Schürze bewirkt eine Abkröpfung, welche die Kante des Kofferraumdeckels nach oben aufsteigen läßt. Wird dann direkt darüber ein weiteres Blech angeordnet, so muß dieses wegen der Abkröpfung einen erheblichen Abstand einhalten. Hierdurch wird ein Raum, den die Stapelsäulen bieten, zu wenig ausgenützt.

Der vorliegenden Erfindung liegt die Aufgabe zugrunde, diesen Nachteil zu beseitigen.

Zur Lösung dieser Aufgabe führt, daß die zwei Wandstreifen einen spitzen Winkel mit einer Grundfläche, Grundplatte od. dgl. einschließen und die Klinkenhebel zwischen den beiden Wandstreifen aufeinanderfolgend in der gleichen Richtung seitlich versetzt an den Drehachsen angeordnet sind.

Hierdurch wird gewährleistet, daß insbesondere Lagergüter mit der oben beschriebenen hohen Ausformung seitlich versetzt zueinander angeordnet werden können, so daß gerade diese hohen Ausformungen sich gegenseitig übergeifen können. Der Raum zwischen zwei Lagergütern braucht nicht in der Höhe diesen Ausformungen zu entsprechen, sondern kann wesentlich verringert werden. Dadurch ist die Lagerung von wesentlich mehr Lagergütern zwischen entsprechenden Stapelsäulen möglich. Diese Raumeinsparung bringt erhebliche Vorteile mit sich.

Während bei den vertikalen Stapelsäulen die Anordnung der Drehachsen kaum Schwierigkeiten bereitet, kann dies bei den schräggestellten Wandstreifen sehr leicht möglich sein. Auch hier bietet die vorliegende Erfindung eine Lösungsmöglichkeit an, die den Zusammenbau der Stapelsäule wesentlich erleichtert. Hierzu dienen vor allem Befestigungselemente, welche die Drehachse halten. Diese Befestigungselemente bestehen aus einem Grundkörper aus dem Anschlagschultern herausgeformt sind. Der Grundkörper wird in eine entsprechende Ausnehmung in dem Wandstreifen eingesetzt, so daß die von den Anschlagschultern gebildeten Anschlagflächen dem Wandstreifen anliegen. Nach außen bildet der Grundkörper eine zu dem Wandstreifen etwa parallel verlaufende Rückwand, nach innen bildet er dagegen eine radial zur Drehachse verlaufende Stirnfläche aus. Letztere dient vor allem dem Anschlag einer später zu beschreibenden Abstandshülse.

Die Drehachse sitzt in Bohrungen in diesen Befestigungslementen, wobei naturgemäß diese Bohrungen mit der Rückwand denselben Winkel einschließen, mit dem auch die Wandstreifen gegenüber der Grundfläche schräggestellt sind. Hierdurch wird erzielt, daß die Drehachsen horizontal, d.h., parallel zur Grundfläche angeordnet sind.

Für das Befestigungselement auf beiden Seiten der Drehachse wird dieselbe Form gewählt, wobei es lediglich um 180° gedreht ist.

Der Zusammenbau ist außerordentlich erleichtert. Von beiden Seiten wird je ein Befestigungselement in die entsprechende Ausnehmung in dem Wandstreifen eingesetzt, wobei in die jeweilige Bohrung der Befestigungselemente die Drehachse eingeschoben ist. Auf der Drehachse befindet sich in Neigungsrichtung der Stapelsäule zuerst der Klinkenhebel und anschließend eine Abstandshülse, welche gewährleistet, daß der Klinkenhebel etwa in seiner gewünschten Position verbleibt. Danach folgt ein Festlegen der Befestigungselement, was der Einfachheit halber über eine Leiste geschieht, die einer Mehrzahl von Befestigungselementen bzw. deren Rückwände aufliegt. Die Leiste wird dann an dem Wandstreifen festgeschraubt.

Die Wirkungsweise der Klinkenhebel selbst ist ähnlich derjenigen, wie sie in der DE-A-38 11 310.4 beschrieben ist. Allerdings wird hier der Klinkenhebel von einem Steuerstift durchsetzt, wobei der Steuerstift beidseits aus dem Klinkenhebel herausragt. Dabei dient derjenige Teil des Steuerstiftes, welcher gegen die Neigungsrichtung der Stapelsäule ausgerichtet ist, der automatischen Betätigung des Klinkenhebels im Zusammenwirken mit einer Nase am Steuerarm des nächst unteren Klinkenhebels. Diese Nase schlägt an den Teil des Steuerstiftes an und bewirkt bei einer Drehung des unteren Klinkenhebels ein Ausschwenken des nächst höheren Klinkenhebels in eine Bereitschafts- bzw. Arbeitsstellung.

Der andere Teil des Steuerstiftes wirkt dagegen mit dem nächst folgenden oberen Klinkenhebel zusammen, wobei dieser eine Steuerkante besitzt, mittels welcher der untere Klinkenhebel in einer Arbeitsstellung verriegelt wird. Sowohl das Ausschwenken des nächst folgenden Klinkenhebels wie auch das Verriegeln des nächst unteren Klinkenhebels erfolgt automatisch bei Auflage eines Ladegutes auf den Klinkenhebel.

Die Rückführung der Klinkenhebel nach Abheben des Ladegutes geschieht, wie ebenfalls in der DE-A-38 11 310 beschrieben, selbstätig, indem der Steuerarm ein höheres Gewicht aufweist, als der Tragarm. Dabei hat sich in der Praxis gezeigt, daß in einigen Fällen der Gewichtsunterschied nicht ausreichen kann oder ungenügend ist. Deshalb wird bevorzugt am Steuerarm noch ein zusätzliches Gewicht angeordnet. Dies kann beispielsweise ein Metall höherer Dichte sein. Zum Einsetzen dieses Gewichtes ist in dem Steuerarm eine Ausnehmung vorgesehen, die allerdings zumindest in einem bestimmten Bereich offen ist. Sollte deshalb die Form des Gewichtes eine Paßungenauigkeit mit der Ausnehmung aufweisen, so kann die Ausnehmung in begrenztem Umfange nachgeben. Das Einsetzen des Gewichtes ist dadurch erleichtert.

Der unterste Klinkenhebel sollte, wie ebenfalls bekannt, immer in Bereitschaftsstellung sein. Er braucht deshalb nicht in eine Ruhestellung geschwenkt zu werden. Dies gewährleistet ein Anschlagstift, der im vorliegenden Ausführungsbeispiel bevorzugt durch Befestigungselement gehalten ist, welche im wesentlichen den oben beschriebenen Befestigungselementen für die Drehachsen entsprechen. Allerdings durchgreift dieser Anschlagstift bevorzugt die Befestigungselemente und ist andernends jeweils durch einen Splint od. dgl. gesichert. Damit ist auch sein Einbau wesentlich erleichtert.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine Seitenansicht eines Teils einer erfindungsgemäßen Stapelsäule;
Figur 2 eine Ansicht der Stapelsäule gemäß Figur 1 in Richtung des Pfeiles A;
Figur 3 eine Ansicht der Stapelsäule entsprechend Figur 2, jedoch nach Entfernung eines Wandstreifens;
Figur 4 eine Ansicht der Stapelsäule entsprechend Figur 3, jedoch in einer weiteren Gebrauchslage;
Figur 5 eine Ansicht eines Wandstreifens entsprechend Figur 2 vor dem Einsetzen von Klinkenhebeln und entsprechender Befestigungselemente;
Figur 6 eine Draufsicht auf zwei bevorzugte Befestigungselemente für Klinkenhebel und Anschlagstift.

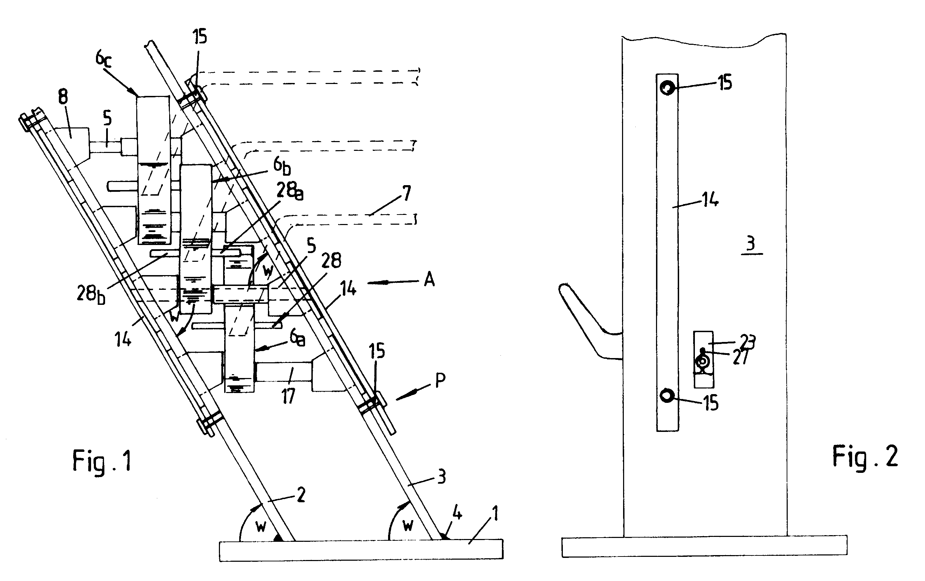

Gemäß Figur 1 sind auf einer Platte 1 zwei Wandstreifen 2 und 3 aufgesetzt und beispielsweise über eine entsprechende Schweißnaht 4 mit der Grundplatte 1 verbunden. Jeder Wandstreifen 2 und 3 schließt mit der Grundplatte 1 einen spitzen Winkel w ein. Auf diese Weise sind die Wandstreifen 2 und 3 in Gebrauchslage schräggestellt.

Die Wandstreifen 2 und 3 werden in gewissen Abständen voneinander von Drehachsen 5 durchsetzt, welche ebenfalls mit den Wandstreifen 2 und 3 spitze Winkel w einschließen. Auf diese Weise sind die Drehachsen 5 in der Ebene der Grundplatte 1 angeordnet. Da die Grundplatte 1 in der Regel auf dem Boden einer Halle aufsteht und somit horizontal angeordnet ist, verlaufen die Drehachsen 5 ebenfalls horizontal.

Im vorliegenden Ausführungsbeispiel sind nur vier Drehachsen 5 gezeigt, wobei sich die Anzahl der Drehachsen 5 beliebig vergrößern läßt und von der Länge der Wandstreifen 2 und 3 abhängig ist.

Jede Drehachse 5 hält einen Klinkenhebel 6, wobei im vorliegenden Ausführungsbeispiel drei Klinkenhebel 6a, 6b und 6c dargestellt sind. Die Klinkenhebel dienen der Lagerung von einem nur gestrichelt angedeuteten Lagergut 7, welches so geformt ist, daß ein senkrecht übereinander stattfindendes Lagern zuviel Raum in Anspruch nehmen würde. Die vorliegende Stapelsäule P soll sich besonders für derartig geformte Lagergüter 7 eignen, jedoch ist sie auch für normal geformte Lagergüter einsetzbar.

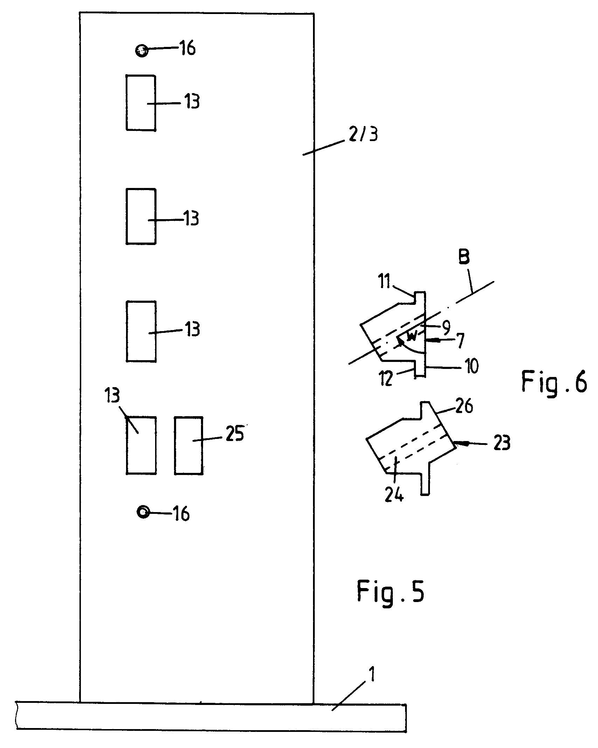

Ein wesentlicher Punkt im vorliegenden Fall ist die Befestigung der Drehachsen 5. Hierzu dienen Befestigungselemente 7, wie sie insbesondere in Figur 6 gezeigt sind. Jedes Befestigungselement 7 weist eine Bohrung 9 auf, in welche in Gebrauchslage die Drehachse 5 eingesetzt wird. Diese Bohrung 9 besitzt eine Achse B, welche im Winkel w zu einer Rückwand 10 bzw. zu Anschlagflächen 11 und 12 verläuft, welche von Schultern des Befestigungselementes 8 gebildet werden.

In Gebrauchslage werden derartige Befestigungselemente 8 in entsprechende Ausnehmungen 13 jedes Wandstreifens 2 bzw. 3 eingesetzt, wobei die Anschlagflächen 11 und 12 von außen her diesen Wandstreifen 2 und 3 anliegen und somit auch die Einsetztiefen des Befestigungselements 8 begrenzen. Zwei sich gegenüberliegende Befestigungslemente 8 sind dabei um 180° zueinander verdreht in die Ausnehmungen 13 eingesetzt. Zwischen ihnen erstreckt sich die Drehachse 5.

Der Festlegung einer Mehrzahl von Befestigungselementen 8 dient eine Leiste 14, welche in Gebrauchslage der Rückwand 10 einer Mehrzahl von Befestigungselementen 8 anliegt und durch entsprechende Schrauben 15 mit den Wandstreifen 2 bzw. 3 verbunden ist. Dabei greifen diese Schrauben 15 in entsprechende Bohrungen 16 (Figur 5) mit Innengewinde ein. Selbstverständlich ist auch denkbar, daß die Befestigungselemente geklebt oder sonstwie an den Wandstreifen festgelegt werden.

Die Befestigungselemente 8 erlauben aber ein schnelles und gleiches Anordnen der Drehachsen 5, wobei vor allem der Zusammenbau wesentlich erleichtet ist. Nachdem die Wandstreifen 2 und 3 auf der Grundplatte 1 in dem gewünschten Winkel festgelegt sind, werden die Befestigungselemente in die Ausnehmungen 13 eingesetzt. Sobald ein Befestigungselement 8 von der einen Seite in seine Ausnehmung 13 eingesetzt ist, erfolgt ein Einschieben der Drehachse 5 in die Bohrung 9, darauf wird eine Abstandshülse 17 auf die Drehachse 5 aufgeschoben und danach der Klinkenhebeln 6 auf den freien Bereich der Drehachse 5 aufgesetzt. Von der anderen Seite wird dann ein ensprechendes, um 180° gedrehtes Befestigungselement 8 in die entsprechende Ausnehmung 13 eingesetzt und nimmt die Drehachse 5 in seiner Bohrung 9 auf. Nachdem eine Mehrzahl von Klinkenhebel 6 auf diese Weise entlang der Stapelsäule P angeordnet sind, werden die Befestigungselement 8 bzw. eine bestimmte Anzahl von Befestigungselementen 8 durch die Leisten 14 endgültig in ihrer Lage fixiert.

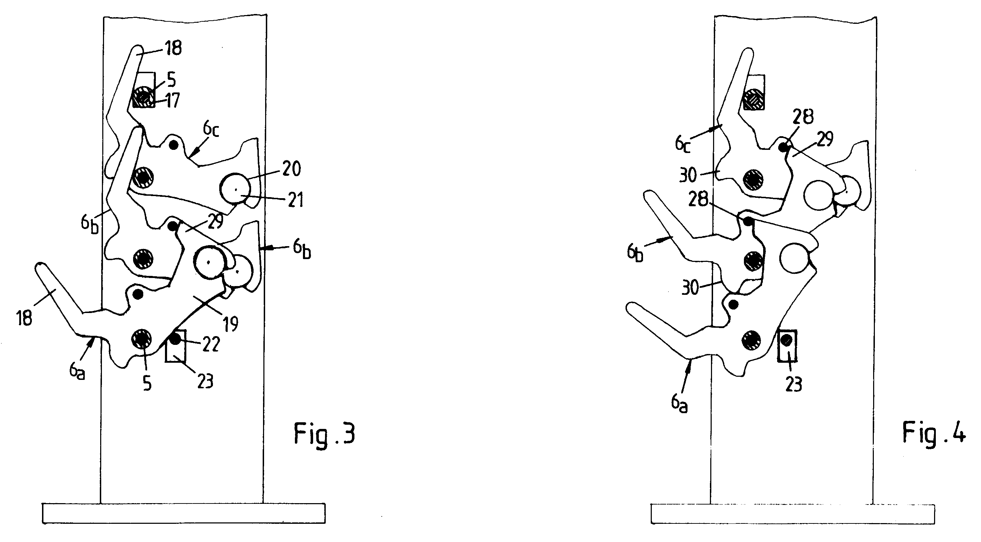

In den Figuren 3 und 4 ist erkennbar, daß jeder Klinkenhebel 6 aus einem Tragarm 18 und einem Steuerarm 19 besteht. Beide Arme 18 bzw. 19 sind beidseits der Drehachse 5 angeordnet. Hierbei besitzt der Steuerarm 19 jedoch ein höheres Gewicht als der Tragarm 18, wobei hier zusätzlich in eine entsprechende Ausnehmung 20 des Steuerarms 19 ein zusätzliches Gewicht 21 eingesetzt sein kann. Der Einfachheit halber ist die Ausnehmung 20 durch eine Bohrung in dem Steuerarm 19 gebildet, wobei die Ausnehmung offen ist. Hierbei kann der Steuerarm bei Paßungenauigkeiten mit dem Gewicht 21 in begrenztem Umfange nachgeben, so daß das Einsetzen des Gewichtes 21 durch Eindrücken des Gewichtes 21 in die Ausnehmung 20 erleichtert ist.

Durch die Gewichtsverteilung bzw. das zusätzliche Gewicht 21 wird bewirkt, daß jeder Klinkenhebel 6 bis auf den untersten Klinkenhebel 6a sich normalerweise in Ruhestellung befindet, wie dies für die Klinkenhebel 6b und 6c in Figur 3 angedeutet ist. In dieser Ruhestellung werden die Klinkenhebel 6b und 6c dadurch gehalten, daß der Tragarm 18 entweder an einem darüber liegenden Befestigungselement 8 oder aber an der Drehachse 5 bzw. der Abstandshülse 17 anschlägt. In dieser Ruhestellung verschwindet in jedem Fall der Klinkenhebel 6b bzw. 6c zwischen die Wandstreifen 2 und 3, so daß ein Bestücken der Stapelsäule P nicht gestört ist.

Der unterste Klinkenhebel 6a befindet sich dagegen in jedem Fall in Bereitschaftsstellung, in welcher der Tragarm 18 aus dem Bereich der Wandstreifen 2 bzw. 3 ausgeschwenkt ist. Zur Halterung des Klinkenhebels 6a in dieser Bereitschaftsstellung ist ein Anschlagstift 22 vorgesehen, der ebenfalls zwischen den beiden Wandstreifen 2 und 3 von Befestigungselementen 23 (siehe Figur 6) gehalten ist. Ein Befestigungselement 23 ist geringfügig anders ausgebildet als das Befestigungselement 8. Auch es weist eine Längsbohrung 24 zur Aufnahme des Anschlagstiftes 22 auf und wird in eine entsprechende Ausnehmung 25 neben der Ausnehmung 13 für den untersten Klinkenhebel 6a eingesetzt. Seine Rückwand 26 ist jedoch abgeschrägt ausgebildet und dient in Gebrauchslage als Anschlag für eine Splint 27, welcher in den Anschlagstift 22 zu dessen Halterung eingesetzt wird. D.h, daß der Anschlagstift 22 so lang ausgebildet, daß er beidseits aus seinem jeweiligen Befestigungslement 23 herausragt.

Jeder Klinkenhebel 6 weist ferner einen Steuerstift 28 auf, welcher den Klinkenhebel 6 durchquert und beidseits überragt. Der eine Teil 28a des Steuerstiftes 28 wirkt mit dem unteren Klinkenhebel und der andere Teil 28b mit dem oberen Klinkenhebel zusammen. Da sich jede Abstandshülse 17 auf der gleichen Seite ihres Klinkenhebels befindet, sind die Klinkenhebel 6 entlang einer Stapelsäule in der gleichen Richtung versetzt zueinander angeordnet. Erkennbar ist, daß der unterste Klinkenhebel 6a mit einer Nase 29 seines Steuerarmes 19 mit dem einen Teil 28a des Steuerstiftes 28 des nachfolgenden Klinkenhebels 6b zusammenwirkt. Wird der unterste Klinkenhebel 6a von seiner Bereitsschaftsstellung in eine Arbeitsstellung geschwenkt, wie dies in Figur 4 angedeutet ist, so drückt die Nase 29 auf den Steuerstift 28 und schwenkt dabei den nachfolgenden Klinkenhebel 6b in Bereitschaftsstellung.

Wird nun dieser Klinkenhebel 6b mit einem Ladegut 7 belegt, so schwenkt er ebenfalls in Arbeitsstellung, wobei dann die Nase 29 seines Steuerarmes 19 wiederum auf den Steuerstift 28 drückt und dabei den nachfolgenden Klinkenhebel 6c in Bereitschaftsstellung schwenkt. Gleichzeitig aber übergreift der Klinkenhebel 6b mit einer Steuerkante 30 den anderen Teil 28b des Steuerstiftes 28 des untersten Klinkenhebels 6a und drückt auf diesen, so daß dieser unterste Klinkenhebel in seiner Arbeitsstellung fixiert ist.

Wird ferner dann der Klinkenhebel 6c beladen, so wirkt dessen Steuerkante zur Verriegelung mit dem Steuerstift 28 des Klinkenhebels 6b zusammen. Diese Funktionsweise läßt sich beliebig fortsetzen.

Beim Entladen erfolgt durch das Zurückfallen des jeweils oberen Klinkenhebels auch ein sofortiges Entriegeln des nachfolgenden Klinkenhebels, so daß dieser wiederum beim Entladen in seine Bereitschaftsstellung und danach in seine Ruhestellung zurückfallen kann.

## Patentansprüche

1. Stapelsäule zum Lagern von Lagergütern übereinander in gegenseitigen Abständen auf zweiarmigen Klinkenhebeln, welche an etwa horizontal zwischen zwei Wandstreifen angeordneten Drehachsen drehbar gelagert sind und einerseits einen Tragarm zum Halten des Lagergutes und andererseits einen Steuerarm aufweisen,
dadurch gekennzeichnet,
daß die zwei Wandstreifen (2, 3) einen spitzen Winkel (w) mit einer Grundfläche, Grundplatte (1) od. dgl. einschließen und die Klinkenhebel (6) zwischen den beiden Wandstreifen (2, 3) aufeinanderfolgend in der gleichen Richtung seitlich versetzt an den Drehachsen (5) angeordnet sind.

2. Stapelsäule nach Anspruch 1, dadurch gekennzeichnet, daß jede Drehachse (5) von Befestigungselementen (8) an den Wandstreifen (2, 3) gehalten ist.

3. Stapelsäule nach Anspruch 2, dadurch gekennzeichnet, daß das Befestigungselement (8) eine Bohrung (9) aufweist, welche in dem Winkel (w) zu einer Rückwand (10) bzw. zu Anschlagflächen (11, 12) angeordnet ist.

4. Stapelsäule nach Anspruch 3, dadurch gekennzeichnet, daß die Anschlagflächen (11, 12) in Gebrauchslage von außen her an die Wandstreifen (2, 3) anschlagen, wobei die Befestigungselemente (8) in Ausnehmungen (13) in den Wandstreifen (2, 3) eingesetzt sind.

5. Stapelsäule nach Anspruch 2 oder 4, dadurch gekennzeichnet, daß die Drehachse (5) in die Bohrung (9) eingesetzt ist, wobei zwischen einem Befestigungselement und dem Klinkenhebel (6) jeweils auf einer Seite eine Abstandshülse (17) der Drehachse (5) aufgeschoben ist.

6. Stapelsäule nach Anspruch 5, dadurch gekennzeichnet, daß eine Mehrzahl von benachbarten Befestigungselementen (8) von einer Leiste (14) überdeckt sind.

7. Stapelsäule nach Anspruch 6, dadurch gekennzeichnet, daß die Leiste (14) über Schrauben (15) an den Wandstreifen (2, 3) festgelegt ist.

8. Stapelsäule nach wenigstens einem der Ansprüche 1 bis 7, dadurch gekennzeichnet, daß jeder Klinkenhebel (6) von einem Steuerstift (28) durchsetzt ist, welcher beidseits aus dem Klinkenhebel (6) herausragt.

9. Stapelsäule nach Anspruch 8, dadurch gekennzeichnet, daß der eine Teil (28a) des Steuerstiftes (28) des einen Klinkenhebels mit einer Nase (29) am Steuerarm (19) des nachfolgenden unteren Klinkenhebels zum Ausschwenken dieses einen Klinkenhebels zusammenwirkt.

10. Stapelsäule nach Anspruch 8 oder 9, dadurch gekennzeichnet, daß der andere Teil (28b) des Steuerstiftes (28) des unteren Klinkenhebels mit einer Steuerkante (30) des nachfolgenden oberen Klinkenhebels zum Verriegeln des unteren Klinkenhebels in seiner Arbeitsstellung zusammenwirkt.

11. Stapelsäule nach wenigstens einem der Ansprüche 1 bis 10, dadurch gekennzeichnet, daß am Steuerarm (19) eine Ausnehmung (2 zur Aufnahme eines Gewichtes (21) vorgesehen ist.

12. Stapelsäule nach Anspruch 11, dadurch gekennzeichnet, daß die Ausnehmung (20) in einem bestimmten Bereich offen ist.

13. Stapelsäule nach wenigstens einem der Ansprüche 1 bis 12, dadurch gekennzeichnet, daß dem untersten Klinkenhebel (6a) ein Anschlagstift (22) zugeordnet ist, welche den untersten Klinkenhebel in einer Bereitstellung zur Aufnahme eines Ladegutes (7) hält.

14. Stapelsäule nach Anspruch 13, dadurch gekennzeichnet, daß der Anschlagstift (22) Befestigungselemente (23) durchgreift und andernends mit einem Splint (27) od. dgl gesichert ist.

## Claims

1. Stacking column for storing stock articles above one another at mutual spacings therebetween on two-armed ratchet levers, which are rotatably mounted on rotary axles disposed substantially horizontally between two wall strips, and said levers comprise, on the one hand, a supporting arm for supporting the stock articles and, on the other hand, a guide arm, characterised in that the two wall strips (2, 3) form an acute angle (w) with a base face, base plate (1) or the like, and the ratchet levers (6) between the two wall strips (2, 3) are successively disposed on the rotary axles (5) so as to be laterally offset in the game direction.

2. Stacking column according to claim 1, characterised in that each rotary axle (5) is retained on the wall strips (2, 3) by securing means (8).

3. Stacking column according to claim 2, characterised in that the securing means (8) has a bore (9), which is disposed at the angle (w) relative to a rear wall (10), or respectively relative to stop faces (11, 12).

4. Stacking column according to claim 3, characterised in that, in the position of use, the stop faces (11, 12) abut from externally against the wall strips (2, 3), the securing means (8) being inserted in recesses (13) in the wall strips (2, 3).

5. Stacking column according to claim 2 or 4, characterised in that the rotary axle (5) is inserted in the bore (9), a spacer sleeve (17) of the rotary axle (5) being slipped over one respective side between a securing means and the ratchet lever (6).

6. Stacking column according to claim 5, characterised in that a plurality of neighbouring securing means (8) are covered by a bar (14).

7. Stacking column according to claim 6, characterised in that the bar (14) is fixed to the wall strips (2, 3) via screws (15).

8. Stacking column according to at least one of claims 1 to 7, characterised in that each ratchet lever (6) is traversed by a guide pin (28), which protrudes from each side of the ratchet lever (6).

9. Stacking column according to claim 8, characterised in that one portion (28a) of the guide pin (28) of one ratchet lever co-operates with a projection member (29) on the guide arm (19) of the subsequent lower ratchet lever for outwardly pivoting this one ratchet lever.

10. Stacking column according to claim 8 or 9, characterised in that the other portion (28b) of the guide pin (28) of the lower ratchet lever co-operates with a lower edge (30) of the subsequent upper ratchet lever for locking the lower ratchet lever in its working position.

11. Stacking column according to at least one of claims 1 to 10, characterised in that a recess (20) for receiving a weight (21) is provided in the guide arm (19).

12. Stacking column according to claim 11, characterised in that the recess (20) is open in a predetermined region.

13. Stacking column according to at least one of claims 1 to 12, characterised in that a stop pin (22) is associated with the lowermost ratchet lever (6a) and keeps the lowermost ratchet lever in a standby position for receiving an article for storage (7).

14. Stacking column according to claim 13, characterised in that the stop pin (22) extends through securing means (23) and is secured at the other end by a splint (27) or the like.

## Revendications

1. Colonne d'empilage pour stocker des produits les uns sur les autres à des intervalles réciproques, sur des leviers à verrou à double bras, montés pivotants sur des axes de rotation sensiblement horizontaux entre deux bandes de parois, et comportant, d'une part, un bras de support pour retenir le produit stocké et, d'autre part, un bras de commande, caractérisée en ce que les deux parois en forme de bandes (2, 3) forment un angle aigu (w) avec une surface de base, plaque de base (1) ou analogue, et les leviers à verrou (6) sont prévus entre les deux parois en forme de bandes (2, 3), successivement les uns derrière les autres, en étant décalés latéralement dans la même direction sur les axes de rotation (5).

2. Colonne d'empilage selon la revendication 1, caractérisée en ce que chaque axe de rotation (5) est tenu aux parois en forme de bandes (2, 3) par des éléments de fixation (8).

3. Colonne d'empilage selon la revendication 2, caractérisée en ce que l'élément de fixation (8) comporte un perçage (9) qui fait un angle (w) par rapport à une paroi arrière (10) ou à des surfaces de butée (11, 12).

4. Colonne d'empilage selon la revendication 3, caractérisée en ce que les surfaces de butée (11, 12) viennent en position d'utilisation, extérieurement contre les parois en forme de bandes (2, 3), les éléments de fixation (8) étant logés dans des cavités (13) des parois en forme de bandes (2, 3).

5. Colonne d'empilage selon la revendication 2 ou 4, caractérisée en ce que l'axe de rotation (5) est placé dans le perçage (9) et entre un élément de fixation et le levier à verrou (6) est émmanchée, chaque fois d'un côté, une douille d'écartement (17) pour l'axe de rotation (5).

6. Colonne d'empilage selon la revendication 5, caractérisée en ce que plusieurs éléments de fixation (8), voisins, sont recouverts par une baguette (14).

7. Colonne d'empilage selon la revendication 6, caractérisée en ce que la baguette (14) est fixée aux parois en forme de bandes (2, 3) par des vis (15).

8. Colonne d'empilage selon au moins l'une des revendications 1 à 7, caractérisée en ce que chaque levier à verrou (6) est traversé par une tige de commande (28) qui sort de chaque côté du levier à verrou (6).

9. Colonne d'empilage selon la revendication 8, caractérisée en ce qu'une partie (28a) de la tige de commande (28) de l'un des leviers à verrou coopère avec un bec (29) du bras de commande (19) du levier de verrou inférieur, suivant, pour déployer l'un de ces leviers à verrou.

10. Colonne d'empilage selon la revendication 8 ou 9, caractérisée en ce que l'autre partie (28b) de la tige de commande (28) du levier de verrou inférieur coopère avec une arête de commande (30) du levier de verrou supérieur, suivant, pour verrouiller le levier de verrou inférieur dans sa position de travail.

11. Colonne d'empilage selon au moins l'une des revendications 1 à 10, caractérisée en ce que le bras de commande (19) comporte une cavité (2) pour recevoir une masse (21).

12. Colonne d'empilage selon la revendication 11, caractérisée en ce que la cavité (20) est ouverte dans une certaine zone.

13. Colonne d'empilage selon au moins l'une des revendications 1 à 12, caractérisée en ce qu'une tige de butée (22) est associée au levier à verrou (6a) inférieur, pour maintenir ce levier à verrou inférieur en position prête à servir pour recevoir un produit (7).

14. Colonne d'empilage selon la revendication 13, caractérisée en ce que la tige de butée (22) traverse des éléments de fixation (23) et son autre extrémité est fixée par une clavette (27) ou moyen analogue.
